# EUROPEAN PATENT APPLICATION

(11) **EP 4 482 069 A1**
(43) Date of publication of application: **25.12.2024**
(21) Application number: 23180221.6
(22) Date of filing: 20.06.2023
(51) Int. Cl.: H04L 1/1867, H04L 1/00

(54) **METHODS, COMPUTER PROGRAMS, AND APPARATUSES FOR A DATA RECEIVER, AN INTERMEDIATE NODE, AND A DATA TRANSMITTER, USER EQUIPMENT, ACCESS NODE, AND PROXY ENTITY**

(71) Applicant: Deutsche Telekom AG, 53113 Bonn (DE)
(72) Inventor: AMEND, Markus, 63667 Nidda (DE); BOGENFELD, Eckard, 67316 Carlsberg (DE); BRUNSTROM, Anna, 65637 Karlstad (SE); PIESKA, Marcus, 65464 Karlstad (SE); KASSLER, Andreas, 65635 Karlstad (SE)
(74) Representative: 2SPL Patentanwälte PartG mbB

(57) **Abstract**

Examples relate to methods, computer programs, and apparatuses for a data receiver, an intermediate node and a data transmitter, examples also relate to user equipment, an access node and a proxy entity. A method (10) for a data receiver (400) in a communication network (800) comprises receiving (12) data packets from a data sender (600) via at least a first transmission path and a second transmission path. The method (10) further comprises receiving (18) a retransmission of a data packet missing from a transmission on the first transmission path on the second transmission path from an intermediate node (500) between the data receiver (400) and the data sender (600).

## Description

### Field

Examples relate to methods, computer programs, and apparatuses for a data receiver, an intermediate node and a data transmitter, to user equipment, an access node and a proxy entity, more particularly, but not exclusively, to a concept for efficient semi-reliable multi-path data transmission using a flow-cache.

### Background

When transmitting data in communication networks, data rate, error rate and latency are key performance indicators. For example, data of some services may be more delay tolerant than others. Email traffic or web browsing are examples of rather delay-tolerant services. Other data services may be rather delay-intolerant, such as communication-class services as voice and video calls. Similar diversity exists with respect to error tolerance. Different classes of network protocols exist which can be distinguished by their reliability.

TCP (Transmission Control Protocol), SCTP (Stream Control Transmission Protocol), and QUIC (Quick User Datagram Protocol (UDP) Internet Connections) using stream mode are per se reliable and even ensure in-order delivery. Any data encapsulated in those protocols at the sender will be received in the exact same way when forwarded after decapsulation to the next stack in the network layer.

UDP, DCCP (Datagram Congestion Control Protocol) and QUIC in datagram mode do not provide functionality to ensure any consistent data reception and are therefore considered unreliable.

These findings are also valid for the respective multipath pendants of the above protocols MP-TCP (Multipath-TCP), MP-QUIC, MP-DCCP and CMT-SCTP (Concurrent Multipath Transfer-SCTP).

In some scenarios, there is a particular interest in a class of protocols that can be seen as a hybrid between reliable and unreliable protocols and are further denoted semi-reliable protocols. They can build on top of unreliable protocols or can be part of the protocol like PR-SCTP (Partial Reliable-SCTP). Semi-reliable transmission has its benefit in re-transmitting for a limited time/number and/or selected data but not to the extent that the transmission stream is ultimately blocked until lost data is re-sent as with TCP. For end-to-end communication requiring a certain extent of reliability, the reliability suffers from the time needed by the receiver to inform the sender about the absence of packets, which is at least in the range of one RTT (Round Trip Time) but often more depending on the network protocol implementation. Especially in multi-path scenarios, semi-reliability is an option, if re-transmission within a certain time window helps to improve QoS (Quality of Service). This might be the case in a multi-path re-ordering process or when the end-to-end service uses receiver buffering to compensate for some jitter/out-of-order arrival of packets.

### Summary

It is a finding of the present disclosure that a delay, which is introduced by retransmission protocols, can be reduced, if the point of retransmission is moved to an intermediate node closer to the data receiver than the original data sender. Therewith, retransmissions experience shorter/faster transmission paths than the original first transmissions from the data sender to the data receiver, which leads to a shorter delay. Therefore, a cache for data packets (flow cache) is provided at the intermediate node to cache data packets for potential retransmission. The data receiver can then receive retransmissions of missing data packets from the intermediate node. The intermediate node receives the data packets from the data sender, even when these data packets are transmitted from the data sender to the data receiver using a different transmission path. This enables retransmission of missing data packets from the intermediate node to the data receiver even for data packets that were meant to be transmitted on path not comprising the intermediate node.

Examples provide a method for a data receiver in a communication network. The method comprises receiving data packets from a data sender via at least a first transmission path and a second transmission path. The method also comprises receiving a retransmission of a data packet missing from a transmission on the first transmission path on the second transmission path from an intermediate node between the data receiver and the data sender. Thereby, a transmission path and delay for the retransmission can be kept shorter than for retransmissions from the data sender along the full path. Data packet loss rates may be improved compared to unreliable protocols because of the retransmissions of missing or lost data packets. Delays or latencies may be improved compared to reliable protocols using retransmissions triggered at the data sender. In addition, since the retransmission is affected on a (second) path different from the (first) path, where the packet was lost, reliable paths may be used to enhance reliability of unreliable paths.

For example, the method may further comprise determining the missing data packet having been transmitted on the first transmission path at the data receiver and transmitting a request for a retransmission of the missing data packet to a cache entity at the intermediate node. Thereby, a path for the retransmission request as well as for the retransmission itself can be kept short. The determination of the missing data packet at the data receiver is one out of several options as will be detailed in the following.

The determining of the missing data packet may comprise detecting a gap for the missing data packet in a sequence of received data packets or detecting an expiry of a timer for an expected arrival of the missing data packet. Thereby, triggers for the retransmission request can be adapted to the respective service needs. Furthermore, an unreliable transmission protocol may be used to receive the data packets from the data sender, such as UDP or DCCP. Examples may enable overlaying an unreliable full transmission path between a sender and a receiver with a reliable shorter sub-path for retransmission. For example, the shorter path may cover one or more wireless transmission sections, which, depending on the access technology, may be more prone to packet loss.

Examples also provide a method for an intermediate node in a communication network. The intermediate node is located in the communication network between a data sender and a data receiver. The method comprises receiving data packets from a data sender. The data packets are transmitted from the data sender to the data receiver via at least a first transmission path and a second transmission path. The method also comprises caching (or buffering) the data packets being transmitted via the first transmission path and obtaining information about a missing data packet having been transmitted on the first transmission path. The method further comprises affecting retransmission of the missing data packet on the second transmission path. Thereby, retransmission can be enabled from the intermediate node to the data receiver on a shorter path. Moreover, retransmission of a data packet lost on the first path can be re-transmitted on the second path, for example, if the second path is more reliable than the first transmission path due the underlying access technology.

The caching or buffering may comprise storing the data packets in a data packet ring buffer. Examples may keep a memory capacity requirement at an adequate level by using a limited size buffer. In further examples, the method may comprise adapting a size of the data packet ring buffer to a delay asymmetry between the first and second transmission paths and to a data packet reception rate at least for the first transmission path at the intermediate node. Therewith the data ring buffer can be adapted to the transmission scenario and over-dimensioning can be kept at reasonable levels or even be avoided.

For example, the act of obtaining the information about the missing data packet comprises receiving the information about the missing data packet from the data sender, the data receiver or an intermediate node in the first transmission path. Different options are conceivable in examples as transmissions can potentially be monitored using different protocols and mechanisms, which can be implemented at different nodes in the network. For example, the obtaining of the information about the missing data packet may comprise receiving a request for a retransmission of the missing data packet from the data receiver.

In some examples the method may also comprise storing information about missing data packets in a retransmission ring buffer. Retransmission information or information about missing data packets arriving before the actual data packets may hence be buffered. Moreover, the method may comprise adapting of a size of the retransmission (request) ring buffer to a delay asymmetry between the first and second transmission paths. Buffer sizes for the buffering the retransmission requests, information on missing data packets, respectively, may be kept at reasonable levels. The method for the intermediate node may also comprise forwarding the data packets being transmitted from the data sender to the data receiver via the second transmission path. Hence, in some examples the intermediate node may be implemented at a node (e.g., an access node) in the second transmission path.

Examples also provide a method for a data sender in a communication network. The method comprises receiving data packets from a data source and transmitting a first portion of the data packets to a data receiver via at least a first transmission path and transmitting a second portion of the data packets to the data receiver via a second transmission path. The method comprises transmitting the first portion of the data packets to an intermediate node. The intermediate node is located in the communication network between the data sender and the data receiver in the second transmission path. The data sender enables the intermediate node to provide retransmissions of data packets that get lost on the first transmission path over the second transmission path.

In some examples the method further comprises indicating to the intermediate node, whether a data packet is transmitted to the data receiver on the first or second transmission path. Therewith, the intermediate node may differentiate between the data packets based on the indication. In line with the above, an unreliable transmission protocol may be used to transmit the data packets to the data receiver. Examples are UDP and DCCP.

Examples also provide a computer program having a program code for performing one of the methods described herein, when the computer program is executed on a computer, a processor, or a programmable hardware component.

Another example is an apparatus for a data receiver in a communication network. The apparatus comprises one or more interfaces configured to communicate in the communication network and one or more processing devices configured to perform one of the methods for the data receiver as described herein. User equipment for a mobile communication system comprising the apparatus is another example.

Yet another example is an apparatus for an intermediate node in a communication network. The apparatus comprises one or more interfaces configured to communicate in the communication network and one or more processing devices configured to perform one of the methods for the intermediate node as described herein. An access node of a mobile communication system comprising the apparatus is another example.

Furthermore, another example is an apparatus for a data sender in a communication network. The apparatus comprises one or more interfaces configured to communicate in the communication network and one or more processing devices configured to perform one of the methods for the data sender as described herein. A proxy entity for communicating data packets from a data server to a data receiver using at least a first transmission path and a second transmission path comprising the apparatus is another example.

Yet another example is a communication system comprising one or more elements of an example of a data receiver, an example of an intermediate node, and an example of a data sender as they are described herein.

### Brief description of the Figures

Some examples of apparatuses and/or methods will be described in the following by way of example only, and with reference to the accompanying figures, in which
Fig. 1 shows a block diagram of an example of a method for a data receiver in a communication network;
Fig. 2 shows a block diagram of an example of a method for an intermediate node in a communication network;
Fig. 3 shows a block diagram of an example of a method for a data sender in a communication network;
Fig. 4 shows block diagrams of examples for apparatuses for a data receiver, an intermediate node, and a data sender in a communication network, and an example of a communication system;
Fig. 5 illustrates a scheduler buffer implementation;
Fig. 6 shows an example scenario in a communication network; and
Fig. 7 illustrates a ring buffer implementation in an example.

### Detailed Description

Some examples are now described in more detail with reference to the enclosed figures. However, other possible examples are not limited to the features of these examples described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

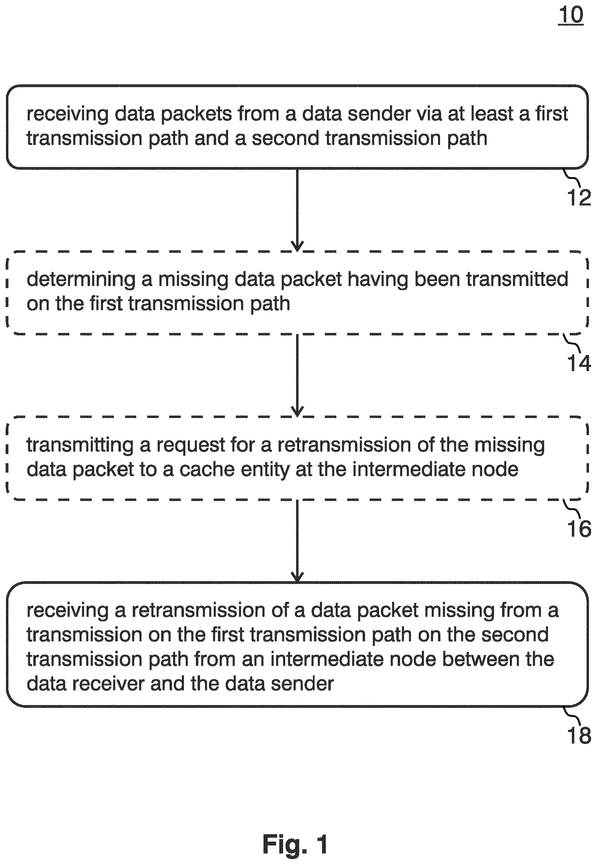

Fig. 1 shows a block diagram of an example of a method 10 for a data receiver in a communication network. The method 10 comprises receiving 12 data packets from a data sender via at least a first transmission path and a second transmission path. The method 10 further comprises receiving 18 a retransmission of a data packet missing from a transmission on the first data path on the second transmission path from an intermediate node between the data receiver and the data sender. Fig. 1 further illustrates two optional steps shown in broken lines. In some examples the data receiver may determine the missing packets and send a retransmission request for a missing data packet to the intermediate node. The method 10 then comprises determining 14 a missing data packet having been transmitted on the first transmission path and transmitting 16 a request for a retransmission of the missing data packet to a cache entity at an intermediate node.

In further examples, data packet loss on the second transmission path may also be considered. Compared to the retransmission scheme for data packets lost on the first transmission path a similar or a different retransmission scheme may be used. For example, if the second path uses a different radio access technology, such technology may use lower layer retransmissions, such as in 3GPP-Systems (3^{rd} Generation Partnership Project). This may lead to a situation, where packet losses on a higher layer are reduced to a very low level or even to zero. Nevertheless, some examples may implement retransmission loops for the second transmission path as well, even if packet losses rarely occur. In case of packet loss on the second transmission path, the above method 10 for the data receiver may comprise receiving a re-transmission of a data packet missing from a transmission on the second data path. The re-transmission may be transmitted on the second transmission path or any other data path, e.g. from the intermediate node between the data receiver and the data sender or any other node.

The present method relates to communication in a communication network. The communication network may be any network comprising two or more network nodes, such as routers, servers, access points, terminals, user equipment, etc. The network nodes may have interfaces for inter-node communication. Such communication between the network nodes may be wired and/or wireless. Between the network nodes different communication protocols may be used on different protocol layers in a protocol stack. For example, such a protocol may be in line with the ISO/OSI (International Organization for Standardization Open Systems Interconnection) model or in line with other protocol stacks, e.g., those defined by the ETSI (European Telecommunications Standards Institute), the IEEE (Institute of Electrical and Electronics Engineers), 3GPP, etc. The data sender, the intermediate node and the data receiver are corresponding network nodes or entities of the communication network. The data packets communicated between the network nodes are protocol units corresponding to the respective protocol layer in the protocol stack. For example, unreliable transmission protocols, e.g., UDP or DCCP, may be used to receive the data packets from the data sender at the data receiver. In other words, the data packets may be data packets according to an unreliable transmission protocol, such as UDP or DCCP.

In the communication network, the respective entities communicate via transmission paths. In the present context, transmission paths may correspond to specific routes between the data sender and the data receiver along which data packets are transmitted. Different paths may use (e.g., traverse) different network nodes or a different sequence of network nodes for transmission. Multi-path transmission can be used to take advantage of enhanced bandwidth offered by parallel paths or enhanced reliability provided by path diversity.

For the detection of a missing data packet (i.e., of a data packet being at least partially lost), different mechanisms are conceivable. For example, sequence numbers may be used to tag the data packets in a protocol header or tail. The determining of the missing data packet may then comprise detecting a gap for the missing data packet in a sequence of received data packets. Additionally, or alternatively, a missing data packet may be detected upon an expiry of a timer for an expected arrival of the missing data packet. In examples such detection may happen at the data receiver, the data sender, or any intermediate node. Some protocols may offer feedback in terms of reception acknowledgments for received data packets and/or negative acknowledgements for data packets not properly received. That way, the data sender becomes aware of missing data packets and may inform the intermediate node on. Other mechanisms are also conceivable. Any intermediate node forwarding packets may become aware of the fact that a data packet is missing. This may be implemented by monitoring transient packets or by receiving feedback (information about a missing packet) from any other node in the network. Any other network node or entity may hence inform the above-described intermediate node on the missing packet.

As outlined above, in the proposed concept, an intermediate node is used to provide retransmission of a data packet missing from a transmission on the first data path on the second transmission path. For this purpose, the intermediate node may use a cache entity, which is a functionality that performs the caching (or buffering) of the data packet to be provided as a retransmission. The cache entity at the intermediate node may be a storage, buffer or memory used as a cache in order to reduce the time it takes to access and retrieve the data. A cache may be implemented as a high-speed storage mechanism that stores data packets of at least one path (e.g., in the storage, buffer, or memory) so that it can be retrieved quickly without having to access the original source. The intermediate node may comprise any memory or storage device for buffering/caching/storing the data packets. The cache entity may hence be used as a temporary storage for data packets and/or information about missing data packets.

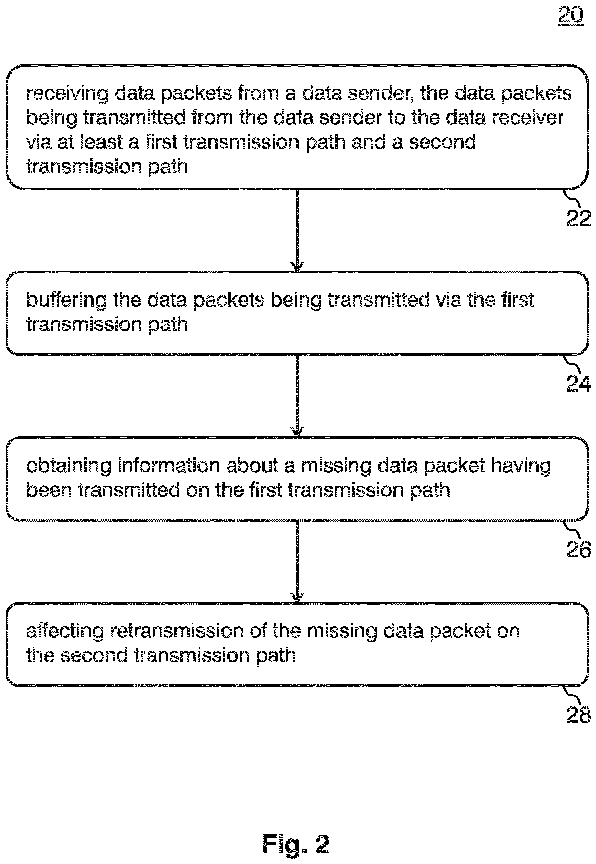

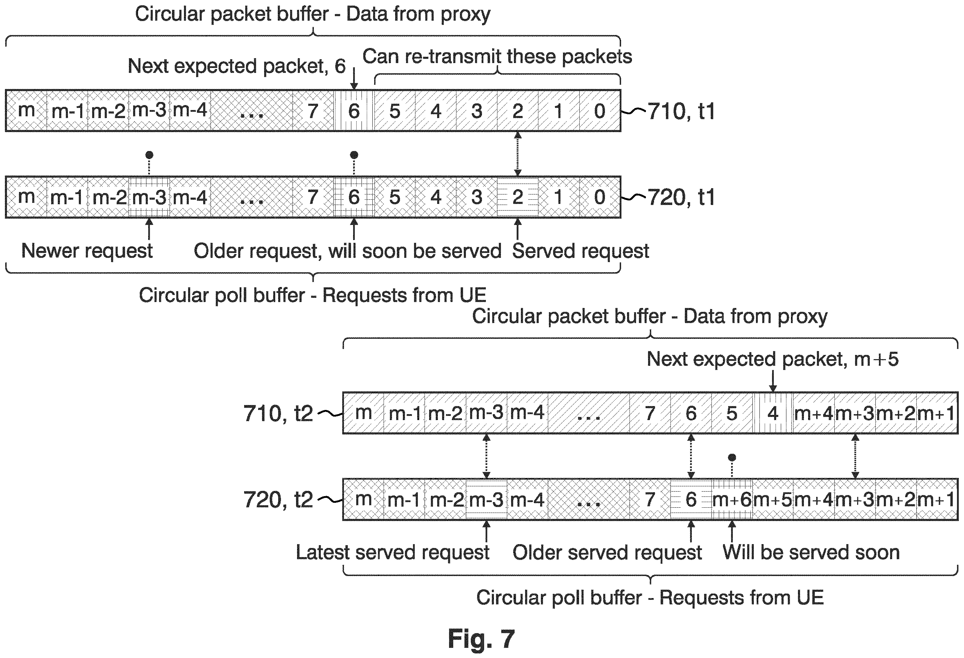

Fig. 2 shows a block diagram of an example of a method 20 for an intermediate node in a communication network. For example, the method 20 for the intermediate node may implement the aforementioned retransmission functionality. The method 20 comprises receiving 22 data packets from a data sender. The data packets are transmitted from the data sender to the data receiver via at least a first transmission path and a second transmission path. The method 20 further comprises caching 24 (buffering) the data packets being transmitted via the first transmission path. The caching/buffering 24 may be done in a cache entity in line with the above description. Further details on an example of a cache or buffer implementation will be outlined subsequently with respect to Fig. 7. The method 20 also comprises obtaining 26 information about a missing data packet having been transmitted on the first transmission path. As already outlined, there are several options conceivable on how the obtaining 26 of the information about the missing data packet can be implemented, e.g., by receiving a retransmission request from the data receiver, by receiving information from the data sender or another intermediate node, etc. The method 20 further comprises affecting 28 retransmission of the missing data packet on the second transmission path. The method 20 may further comprise forwarding the data packets being transmitted from the data sender 600 to the data receiver 400 via the second transmission path.

Hence, the intermediate node may forward data packets originally transmitted by the data sender via the second data path with or without buffering. In examples, data packets transmitted on the second path may be buffered at the intermediate node or at a different network node. For example, this may also be done for the purpose of retransmissions. Depending on the reliability of the underlying technology, packet losses and respective retransmissions for data packets transmitted on the second transmission path may occur less frequent compared to the retransmission of data packets originally transmitted on the first transmission path.

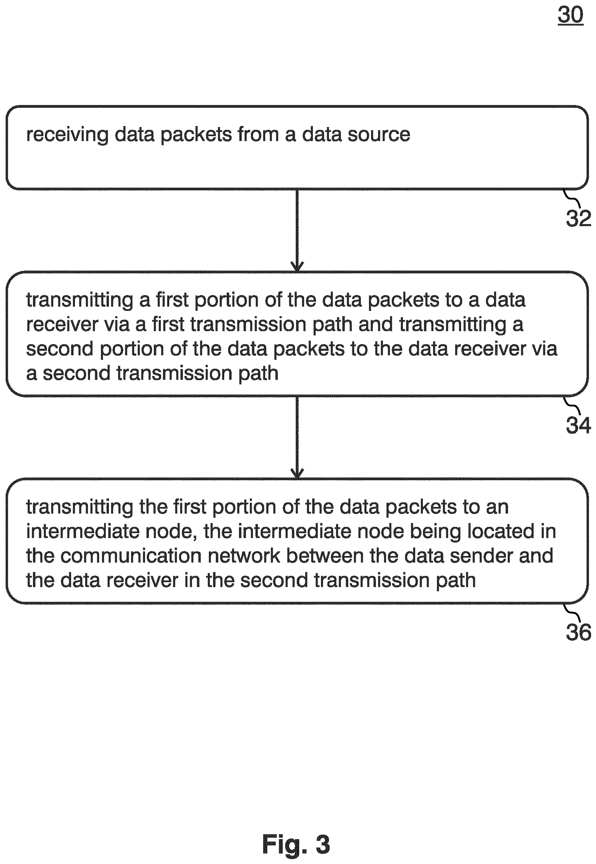

Fig. 3 shows a block diagram of an example of a method 30 for a data sender in a communication network. While Fig. 1 relates to a method being performed by the data receiver, Fig. 3 relates to the data receiver's counterpart, i.e., the entity initially transmitting the data packet. The intermediate node discussed in connection with Fig. 2 sits between these two entities (e.g., in the second transmission path), as indicated by the term "intermediate node". The method 30 comprises receiving 32 data packets from a data source and transmitting 34 a first portion of the data packets to a data receiver via a first transmission path and transmitting a second portion of the data packets to the data receiver via a second transmission path. The method 30 also comprises transmitting 36 the first portion of the data packets to an intermediate node. The intermediate node is located in the communication network between the data sender and the data receiver in the second transmission path. For example, the data sender may indicate to the intermediate node, whether a data packet is transmitted to the data receiver on the first or second transmission path. Thereby, the intermediate node may identify which data packets need to be cached/buffered. An unreliable transmission protocol, e.g., UDP or DCCP, may be used to transmit the data packets to the data receiver. The method 30 may further comprise obtaining information about a missing data packet on the first transmission path and forwarding the information about the missing data packet to the intermediate node. Such a mechanism may be particularly useful if a delay on the first path is shorter than on the second path. Hence, a delay for the communication of the information about the missing data packet on the first data path may be shorter than on the second data path. Thereby, an overall average delay may be reduced.

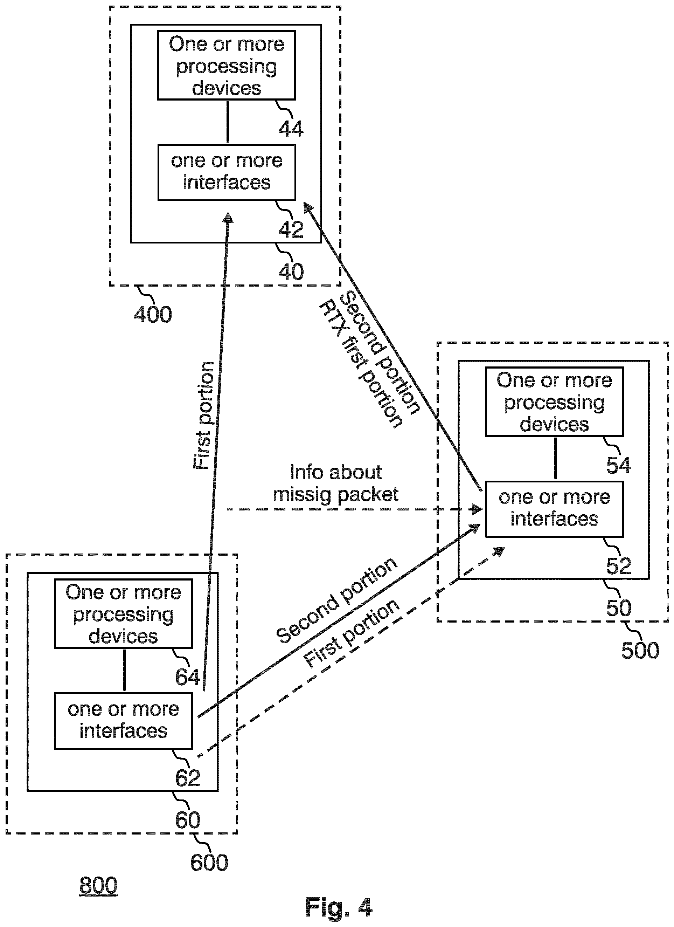

Fig. 4 shows block diagrams of examples for apparatuses 40, 50, and 60, for a data receiver 400, an intermediate node 500, and a data sender 600 in a communication network 800. Fig. 4 illustrates that the apparatus 40 for the data receiver 400 comprises one or more interfaces 42 configured to communicate in the communication network 800. The apparatus 40 also comprises one or more processing devices 44. The one or more interfaces 42 are coupled to the one or more processing devices 44, which are configured to perform one of the methods 10 described herein. The data receiver 400 comprising the apparatus 40 is shown in broken lines, because it is optional from the perspective of the apparatus 40. For example, the data receiver 400 may be user equipment for a mobile communication system comprising the apparatus 40.

Fig. 4 likewise illustrates an apparatus 50 for an intermediate node 500 in the communication network 800. The apparatus 50 comprises one or more interfaces 52, which are configured to communicate in the communication network 800. The apparatus 50 also comprises one or more processing devices 54. The one or more interfaces 52 are coupled to the one or more processing devices 54, which are configured to perform one of the methods 20 described herein. The intermediate node 500 comprising the apparatus 50 is shown in broken lines, because it is optional from the perspective of the apparatus 50. For example, the intermediate node 500 may be an access node of a mobile communication system comprising the apparatus 50.

As shown in Fig. 4, another example is an apparatus 60 for a data sender 600 in a communication network. The apparatus 60 comprises one or more interfaces 62, which are configured to communicate in the communication network 800. The apparatus 60 also comprises one or more processing devices 64. The one or more interfaces 62 are coupled to the one or more processing devices 64, which are configured to perform one of the methods 30 described herein. The data sender 600 comprising the apparatus 60 is shown in broken lines, because it is optional from the perspective of the apparatus 60. For example, the data sender 600 may be a proxy entity comprising the apparatus 60 for communicating data packets from a data server to the data receiver 400 using at least a first transmission path (shown in Fig. 4 as arrow indicating the transmission path for the first portion of the data packets) and a second transmission path (shown in Fig. 4 as arrow for the second transmission path via the intermediate node 500).

Fig. 4 further illustrates an example of a communication system 800 comprising one or more elements of an example of a data receiver 400, an example of an intermediate node 500, and an example of a data sender 600 as they are described herein.

As illustrated in Fig. 4, the respective one or more processing devices 44, 54, 64 are coupled to one or more interfaces 42, 52, 62. The one or more interfaces 42, 52, 62 may correspond to one or more inputs and/or outputs for receiving and/or transmitting information, which may be in digital (bit) values according to a specified code or protocol, within a module, between modules or between modules of different entities. For example, an interface 42, 52, 62 may comprise interface circuitry configured to receive and/or transmit information. In examples an interface 42, 52, 62 may correspond to any means for obtaining, receiving, transmitting or providing analog or digital signals or information, e.g., any connector, contact, pin, register, input port, output port, conductor, lane, etc., which allows providing or obtaining a signal or information. An interface 42, 52, 62 may be configured to communicate (transmit, receive, or both) in a wireless or wireline manner and it may be configured to communicate, i.e., transmit and/or receive signals, information with further internal or external components. The one or more interfaces 42, 52, 62 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

The one or more processing devices 44, 54, 64 may be implemented using one or more processing units, one or more circuitries, any means for processing, such as a processor, a computer or a programmable hardware component being operable with accordingly adapted software. In other words, the described function of the one or more processing devices 44, 54, 64 may as well be implemented in software, which is then executed on one or more programmable hardware components. Such hardware components may comprise a general-purpose processor, a Digital Signal Processor (DSP), a micro-controller, etc.

In the following, a more detailed application of the methods and apparatuses introduced in connection with Figs. 1 to 6 is given.

Examples may overcome the at least one RTT it needs between end-to-end sender and receiver to exchange information about missing packets. For that, a flow cache is defined as part of the transmission path at the intermediate node 500, which holds packets for retransmission, and which is closer to the receiver 400 than the sender 600. This may have the benefit that a flow-cache supported semi-reliability function provides better experience as the likelihood of useful re-transmission increases.

Examples may be used for 3GPP ATSSS (Access Traffic Steering, Switching and Splitting), e.g., for their releases 17 and 18 and the support of non-TCP splitting using MP-DCCP or MP-QUIC encapsulation of end-to-end data. Whenever re-transmission within the ATSSS network is faster than re-transmitting end-to-end, semi-reliability is an option and benefits in particular from the flow cache. Also, in a proxy environment, which is part of an end-to-end transmission chain, semi-reliability within a sub-chain supported by the flow cache is more optimal instead of requesting re-transmission from the original sender by the final receiver. Further details on ATSSS can be found in Technical Specifications (TS) TS 23.501 V18.1.0 (2023-03), 3rd Generation Partnership Project; Technical Specification Group Services and System Aspects; System architecture for the 5G System (5GS); Stage 2; (Release 18); section 4.2.10 Architecture Reference Model for ATSSS Support; and TS 24.193 V18.1.0 (2023-03); 3rd Generation Partnership Project; Technical Specification Group Core Network and Terminals; 5G System; Access Traffic Steering, Switching and Splitting (ATSSS); Stage 3; (Release 18).

Fifth generation (5G) cellular networks are set to include a transport-layer multi-access framework, potentially based on multi-path protocols like MP-QUIC or MP-DCCP. Such a framework would enable seamless and transparent aggregation of heterogeneous wireless access networks, thus increasing the aggregated capacity and robustness of 5G networks. One way to implement this kind of framework is as a multi-path tunnel, which has the advantage over a split-connection approach that a single multi-path tunnel could serve any traffic type.

Some Internet traffic types are known to be loss sensitive, while other types are loss-tolerant. However, even if the traffic is relatively loss-tolerant, it does not follow that packet loss is without negative effect; such an effect could be felt at the application-layer, where packet loss could e.g. deteriorate video play-back, or else at the transport-layer, where packet loss could cause a reduction in sending rate. Conversely, imposed reliability also entails an increase in delay, which could be detrimental to the user experience.

Three modes of reliability will be considered in the following:
(i) traditional unreliability, such as that offered by UDP or DCCP;
(ii) traditional reliability, such as that offered TCP or QUIC; and
(iii) an example of semi-reliability, which is implemented on top of DCCP.

Semi-reliability is considered using a semi-reliable flow cache meant to be deployed at the wireless edge, e.g. at the cellular base station. For example, the semi-reliable flow cache may be provided by the intermediate node discussed in connection with Figs. 1 to 6, and in particular with Figs. 2 and 4. Two advantages may result from using semi-reliability over traditional reliability: Firstly, the native ability to recover packets over any path, regardless of the path over which the lost packet was sent. This may be particularly attractive when considering that WiFi (Wireless Fidelity) tends to be very dynamic and have a higher loss rate than cellular access networks. Secondly, packets may be released out of order, so concerns about head-of-line blocking are diminished. Semi-reliability might be preferable to unreliability: Firstly, delay sensitive streams are not necessarily unaffected by loss, and will likely benefit from timely retransmissions. Secondly, even if the stream itself is not affected with loss, it may well use underlying congestion control or path monitoring that reacts to loss.

For comparison, a semi-reliable scheduler at a proxy or data sender 600 is introduced, which has the following characteristics:
(i) it is able to re-transmit over any path, regardless of the original path over which the packet was sent;
(ii) it is toggled purely by poll requests, and may be active at the sender with no overhead other than CPU processing cycles;
(iii) it requires no additional buffer other than what the scheduler already has;
(iv) it requires no feedback from the receiver, except for the poll requests;
(v) it cannot guarantee that packets are available for re-transmissions;
(vi) it will require a properly sized scheduler buffer to operate as intended.

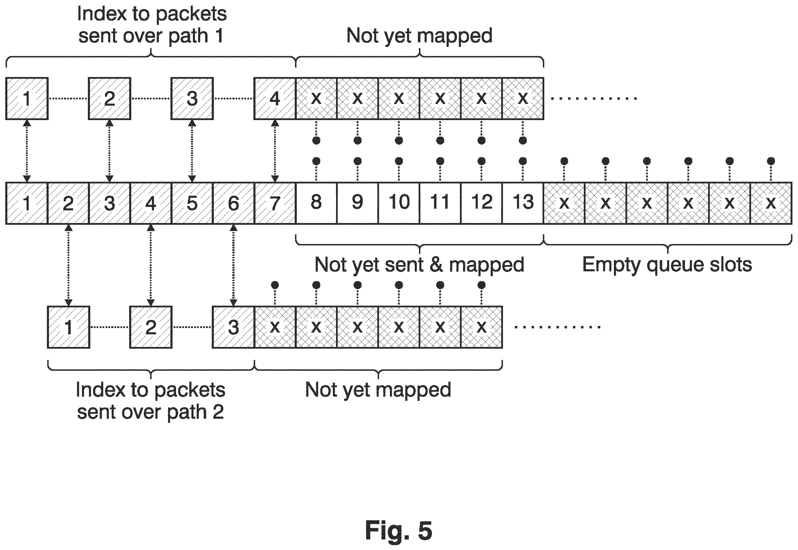

Fig. 5 illustrates a modified scheduler buffer. This buffer will maintain one index per-path into the buffer, allowing for the mapping between path sequence numbers and main sequence numbers. With this mapping, the scheduler is able to translate a re-transmission request made over a given path into a global sequence number. The previously mentioned CPU overhead is due to this mapping. To enable this retransmission to take place over any path, additionally a path index is needed in the packet header, so that the receiver may recognize which path a re-transmitted packet belongs to - this is necessary to resolve packet scrambling. In Fig. 5 the shading of the slots on the left is used to indicate packets that have already been scheduled. These packets therefore also have a mapping between the global sequence number and the path sequence number. White is used to indicate packets that have arrived at the scheduler, but have not yet been scheduled, hence - no mapping. Finally, the shading of the slots on the right indicates empty queue slots. As soon as the number of scheduled packets surpass the buffer size, only already scheduled and white slots will remain.

No acknowledgement is required to clear the scheduler buffer; as depicted in Fig. 5, the buffer will instead eventually wrap around and de-link any mapping previously made. This design choice reduces the amount of feedback needed, but also entails that the scheduler might not be able to serve a given re-transmission request. To increase the likelihood of re-transmission, the buffer needs to be properly sized relative to the bandwidth-delay product (BDP). Another option is to withhold some portion of the buffer in-front of the buffer head from being used, e.g., if a tail of size 7 were to be withheld in Fig. 5, there would be no risk of a re-transmission being impossible. The obvious downside to withholding in this manner is the increased risk of buffer overflows, unless the buffer size is also increased. If an implementation does not use this kind of reservation, a sudden burst arriving at the scheduler would risk over-writing packets that may subsequently be requested for re-transmission.

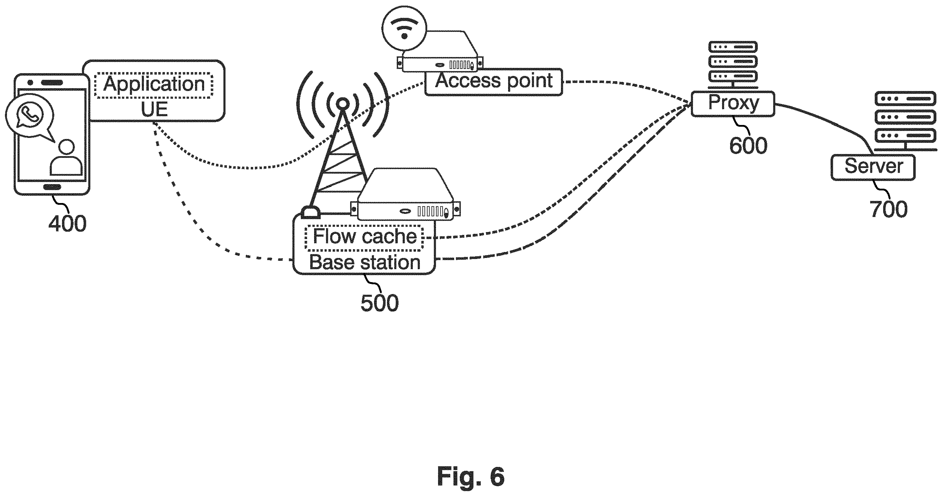

A semi-reliable cache in an example is meant to be deployed at the wireless edge, as shown in Fig. 6, where it would enable a shorter re-transmission delay and less head-of-line blocking than the semi-reliable proxy scheduler. Fig. 6 illustrates user equipment (UE) as data receiver 400 in line with the above description on the very left, an intermediate node 500 implemented at a base station in the middle, and a proxy as data sender 600 obtaining the data from a server 700 at the right. The proxy 600 transmits the data packets to the UE 400 using a first path (WiFi), which is shown at the top, and using a second path (5G) shown at the bottom. The flow cache is implemented at the 5G base station 500 (the wireless edge). In this example a flow cache is deployed in an ATSSS (Access Traffic Steering, Switching and Splitting)-like scenario. Traffic scheduled over the WiFi path (at the top in Fig. 6) is also transmitted to the base station cache (intermediate node 500), the purpose being to reduce or even minimize the re-transmission delay for packets lost over the WiFi-path. Rather than the UE receiving re-transmissions from the proxy, it may now receive them from the cache.

The cache uses a packet buffer, a request queue, and some sort of connection with both the LTE 400 and the proxy 600. In the setup shown in Fig. 6 the connection is based on UDP, which is preferable given that any congestion control should be avoided to or from the cache that might slow the down the cache response. Note that the flow to the cache would ideally traverse over-provisioned fiber-optic links, while the flow from the cache 500 to the UE 400 would only be a small fraction of the entire flow, and that neither of these scenarios requires congestion control. Although UDP is assumed for all transmissions to and from the cache, the ideal protocol would be a connection-based protocol without congestion control. Currently, pull-requests are made to the cache whenever a sequence gap is created, for the packets needed to fill that gap. However, a timer-based poll mechanism is clearly also beneficial, especially, when, for example, the WiFi goes into outage.

In the example, the principles of the buffer described in Fig. 5 can be reused to create the slightly modified buffer seen in Fig. 7. Fig. 7 shows a buffer-scheme for the flow cache. In the example it is implicit that the LTE-path is longer than the WiFi-path - otherwise there would not be any pending requests. On the left there is the state of the buffer when the first 6 packets have arrived and on the right there is the state, when m + 4 packets have arrived, and packets 0-3 have been overwritten by the queue head.

Fig. 7 illustrates a ring buffer implementation in an example, where the data and request buffers are shown at an earlier time t1 on the left and at a later time t2 on the right. The data packet buffers 710, t1 and 710, t2 are shown at the top, the request buffers 720, t1 and 720, t2 are shown at the bottom. Packet and request buffers are implemented as circular of ring buffers, which means that buffer content will be overwritten eventually. In this example, the method 20 (shown in Fig. 2) for the intermediate node 500 comprises (caching/buffering 24 by) storing the data packets in a limited size buffer, e.g. a data packet ring buffer 710. The method 20 further comprises storing requests for retransmissions (information about missing data packets) in a retransmission request buffer of limited size, e.g. a ring buffer 720. In this example it is assumed that the data receiver 400 requests retransmissions from the intermediate node 500 by transmitting retransmission requests, which are received at the intermediate node 500. In other examples, the information about missing data packets may be received from other nodes, e.g. the act of obtaining 26 of the information about the missing data packet may comprise receiving the information about the missing data packet from the data sender 600, the data receiver 400 or an intermediate node in the first transmission path.

At time t1 it can be seen that the packet buffer 710, t1 holds data packets 0, 1,2 3, 4, and 5. Data packet 6 is the next expected data packet. Data packets 1-5 are buffered and can potentially be re-transmitted. In the request buffer 720, t1 it can be seen that there was a retransmission request for data packet 2, which has already been served. There is another retransmission request for data packet 6 (which is not yet in the data buffer 710, 11), which will be served soon. Newer data packets and requests will be stored further left until the buffer end is reached at slot m, after which the wrap around takes place and slot 0 will be overwritten.

At time t2 shown on the right, the wrap around took place and the next expected packet will take the slot of former data packet 4 (5^{th} slot from the right). The request buffer 720,t2 shows a latest served request in slot m-3 and the next retransmission to be served in slot m+6. Older requests, e.g. request 6, will be overwritten just like in the data buffer.

A remaining key issue is that the buffer has to be sufficiently big for the cache to function properly, or else the cache will be unable to service re-transmission requests. For precise dynamic scaling of the packet buffer, the cache would need to know the rate at which packets arrive at the cache and the delay asymmetry between the paths. The former is perceived by the cache itself, while the latter would either have to be conveyed to the cache or inferred from the observed period between a re-transmission request and the arrival of the requested packet at the cache. The method 20 of Fig. 2 may hence comprise adapting a size of the data packet ring buffer 710 to a delay asymmetry between the first and second transmission paths and to a data packet reception rate at least for the first transmission path at the intermediate node 500. The method 20 may further comprise storing information about missing data packets in a retransmission ring buffer 720 (in terms of the retransmission requests in this example). Likewise, the method 20 may further comprise adapting a size of the retransmission ring buffer 720 to a delay asymmetry between the first and second transmission paths

Compared to the proxy buffer, this buffer would be smaller. This is because the cache buffer is scaled to the throughput of the WiFi path only, and to the delay difference as opposed to the RTT. Note that the packet buffer is redundant if the cellular path is the longer path, while the request buffer is redundant if the WiFi path is longer. Unlike the buffer in Fig. 5, there is no sequence number mapping in Fig. 7; this is because this buffer is intended to receive packets from one path only. However, the request buffer is needed in case a request arrives before the actual packet. This will happen if the cellular path is longer than the WiFi path.

In examples, the flow cache is used as a re-transmission source for packets lost or delayed over the WiFi path. In this example, only down-link traffic is considered, in which case the proxy-side scheduler will have to duplicate packets sent over the WiFi path, and send these to the cache as well, cf. Fig. 6. The cache will not forward these over the cellular access network and would thereby only use the capacity of the back-haul network and not waste valuable wireless capacity - except for when lost packets are requested by the UE 400.

In the example shown in Fig. 6, a semi-reliable cache is deployed at the cellular base station for down-link traffic. If the same kind of service is to be provided in the up-link direction, the roles of the above data receiver and sender are exchanged. For example, a cross-layer mechanism may be used in examples, were packets that are dropped by the WiFi MAC (Medium Access Control)-layer can be returned to the transport-layer scheduler for scheduling over other paths. This would be functionally equivalent to the semi-reliable cache. Note that this cross-layer approach could be deployed for down-stream traffic as well, but only if the proxy is deployed at the cellular base-station, which also acts as a WiFi access point; only a small fraction of the total number of WiFi access-points could realistically be deployed at a cellular base station.

A flow cache may also be used to enable more efficient scheduling in further examples. Unlike the previous semi-reliability use-case, this use case requires a cache at all wireless edge nodes over which packets are scheduled. The flow still has to be duplicated to each cache; resulting in a greater usage of the cellular back-haul network. The general approach is to pull packets from the cache to the user equipment. This would remove the need for ACK packets - both between the cache and the proxy, as well as the cache and the receiver. This is because all congestion related decision-making would be made at the receiver - as opposed to at the sender. However, in the most naive implementation of this approach the number ACK packets prevented would equate the number of pull packets. The primary reason for this setup would be to reduce the length of the feedback-loop to allow for more precise scheduling. This is particularly attractive over wireless links, which are often highly dynamic.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for a data receiver (400) in a communication network (800), the method (10) comprising
receiving (12) data packets from a data sender (600) via at least a first transmission path and a second transmission path; and
receiving (18) a retransmission of a data packet missing from a transmission on the first transmission path on the second transmission path from an intermediate node (500) between the data receiver (400) and the data sender (600).

2. The method (10) of claim 1, further comprising determining (14) the missing data packet having been transmitted on the first transmission path and transmitting (16) a request for a retransmission of the missing data packet to a cache entity at the intermediate node (500).

3. A method (20) for an intermediate node (500) in a communication network (800), the intermediate node (500) being located in the communication network (800) between a data sender (600) and a data receiver (400), the method (20) comprising
receiving (22) data packets from a data sender (600), the data packets being transmitted from the data sender (600) to the data receiver (400) via at least a first transmission path and a second transmission path;
buffering (24) the data packets being transmitted via the first transmission path; obtaining (26) information about a missing data packet having been transmitted on the first transmission path; and
affecting (28) retransmission of the missing data packet on the second transmission path.

4. The method (20) of claim 3, wherein the buffering (24) of the data packets comprises storing the data packets in a data packet ring buffer.

5. The method (20) of claim 4, further comprising adapting a size of the data packet ring buffer to a delay asymmetry between the first and second transmission paths and to a data packet reception rate at least for the first transmission path at the intermediate node (500).

6. The method (20) of one of the claims 3 to 5, wherein the act of obtaining (26) the information about the missing data packet comprises receiving the information about the missing data packet from the data sender, the data receiver or an intermediate node in the first transmission path.

7. The method (20) of one of the claims 3 to 6, further comprising storing information about missing data packets in a retransmission ring buffer.

8. The method (20) of claim 7, further comprising adapting a size of the retransmission ring buffer to a delay asymmetry between the first and second transmission paths.

9. The method (20) of one of the claims 3 to 8, wherein the act of obtaining the information about the missing data packet comprises receiving a request for a re-transmission of the missing data packet from the data receiver.

10. A method (30) for a data sender (600) in a communication network (800), the method (30) comprising
receiving (32) data packets from a data source (700);
transmitting (34) a first portion of the data packets to a data receiver (400) via a first transmission path and transmitting a second portion of the data packets to the data receiver (400) via a second transmission path; and
transmitting (36) the first portion of the data packets to an intermediate node (500), the intermediate node (500) being located in the communication network (800) between the data sender (600) and the data receiver (400) in the second transmission path.

11. The method (30) of claim 10, further comprising indicating to the intermediate node (500), whether a data packet is transmitted to the data receiver (400) on the first or second transmission path.

12. A computer program having a program code for performing one of the methods of one of the claims 1 to 11, when the computer program is executed on a computer, a processor, or a programmable hardware component.

13. An apparatus for a data receiver in a communication network, the apparatus comprising
one or more interfaces configured to communicate in the communication network; one or more processing devices configured to perform one of the methods of claims 1 or 2.

14. An apparatus for an intermediate node in a communication network, the apparatus comprising
one or more interfaces configured to communicate in the communication network; one or more processing devices configured to perform one of the methods of claims 3 to 9.

15. An apparatus for a data sender in a communication network, the apparatus comprising
one or more interfaces configured to communicate in the communication network; one or more processing devices configured to perform one of the methods of claims 10 or 11.

## Amended claims

### Amended claims in accordance with Rule 137(2) EPC.

1. A method (10) for a data receiver (400) in a communication network (800), the method (10) comprising
receiving (12) data packets from a data sender (600) via at least a first transmission path and a second transmission path, wherein the first and second transmission paths use different radio access technologies; and
receiving (18) a retransmission of a data packet missing from a transmission on the first transmission path on the second transmission path from an intermediate node (500) between the data receiver (400) and the data sender (600).

2. The method (10) of claim 1, further comprising determining (14) the missing data packet having been transmitted on the first transmission path and transmitting (16) a request for a retransmission of the missing data packet to a cache entity at the intermediate node (500).

3. A method (20) for an intermediate node (500) in a communication network (800), the intermediate node (500) being located in the communication network (800) between a data sender (600) and a data receiver (400), the method (20) comprising
receiving (22) data packets from a data sender (600), the data packets being transmitted from the data sender (600) to the data receiver (400) via at least a first transmission path and a second transmission path, wherein the first and second transmission paths use different radio access technologies;
buffering (24) the data packets being transmitted via the first transmission path; obtaining (26) information about a missing data packet having been transmitted on the first transmission path; and
affecting (28) retransmission of the missing data packet on the second transmission path.

4. The method (20) of claim 3, wherein the buffering (24) of the data packets comprises storing the data packets in a data packet ring buffer.

5. The method (20) of claim 4, further comprising adapting a size of the data packet ring buffer to a delay asymmetry between the first and second transmission paths and to a data packet reception rate at least for the first transmission path at the intermediate node (500).

6. The method (20) of one of the claims 3 to 5, wherein the act of obtaining (26) the information about the missing data packet comprises receiving the information about the missing data packet from the data sender, the data receiver or another intermediate node in the first transmission path, or wherein the act of obtaining (26) the information about the missing data packet comprises receiving a request for a retransmission of the missing data packet from the data receiver.

7. The method (20) of one of the claims 3 to 6, further comprising storing information about missing data packets in a retransmission ring buffer.

8. The method (20) of claim 7, further comprising adapting a size of the retransmission ring buffer to a delay asymmetry between the first and second transmission paths.

9. A method (30) for a data sender (600) in a communication network (800), the method (30) comprising
receiving (32) data packets from a data source (700);
transmitting (34) a first portion of the data packets to a data receiver (400) via a first transmission path and transmitting a second portion of the data packets to the data receiver (400) via a second transmission path, wherein the first and second transmission paths use different radio access technologies; and
transmitting (36) the first portion of the data packets to an intermediate node (500), the intermediate node (500) being located in the communication network (800) between the data sender (600) and the data receiver (400) in the second transmission path.

10. The method (30) of claim 9, further comprising indicating to the intermediate node (500), whether a data packet is transmitted to the data receiver (400) on the first or second transmission path.

11. A computer program having a program code for performing one of the methods of one of the claims 1 to 10, when the computer program is executed on a computer, a processor, or a programmable hardware component.

12. An apparatus for a data receiver in a communication network, the apparatus comprising
one or more interfaces configured to communicate in the communication network;
one or more processing devices configured to perform one of the methods of claims 1 or 2.

13. An apparatus for an intermediate node in a communication network, the apparatus comprising
one or more interfaces configured to communicate in the communication network;
one or more processing devices configured to perform one of the methods of claims 3 to 8.

14. An apparatus for a data sender in a communication network, the apparatus comprising
one or more interfaces configured to communicate in the communication network;
one or more processing devices configured to perform one of the methods of claims 9 or 10.
